(19) Europäisches Patentamt

European Patent Office

Office européen des brevets

(11) EP 1 385 394 B1

(12) EUROPEAN PATENT SPECIFICATION

(45) Date of publication and mention
of the grant of the patent:
16.08.2006 Bulletin 2006/33

(51) Int Cl.:
A23L 1/236 (2006.01)     A23P 1/06 (2006.01)
A23L 2/60 (2006.01)      A23L 2/39 (2006.01)

(21) Application number: 02725960.5

(22) Date of filing: 09.05.2002

(86) International application number:
PCT/US2002/014505

(87) International publication number:
WO 2002/091856 (21.11.2002 Gazette 2002/47)

(54) COMPOSITIONS WITH HIGH INTENSITY SWEETENER HAVING ENHANCED AQUEOUS SOLUBILITY AND METHODS OF THEIR PREPARATION

STARK SÜSSUNGSMITTEL-ENTHALTENDE ZUBEREITUNGEN MIT ERHÖHTER WASSERLÖSLICHKEIT UND VERFAHREN FÜR DEREN HERSTELLUNG

COMPOSITIONS A SOLUBILITE AQUEUSE AMELIOREE ET PROCEDES DE PREPARATION ASSOCIES

(84) Designated Contracting States:
AT BE CH CY DE DK ES FI FR GB GR IE IT LI LU
MC NL PT SE TR

(30) Priority: 11.05.2001 US 853391

(43) Date of publication of application:
04.02.2004 Bulletin 2004/06

(73) Proprietor: THE PROCTER & GAMBLE COMPANY
Cincinnati, Ohio 45202 (US)

(72) Inventors:
 • DAKE, Timothy, William
   Cincinnati, OH 45231 (US)
 • NIEMI, Jarad, Bohart
   Cincinnati, OH 45209 (US)
 • HUGHES, Donald, Lee
   Cincinnati, OH 45225 (US)
 • KESTER, Jeffrey, John
   West Chester, OH 45069 (US)
 • COMPTON, Donald, Brown
   Wyoming, OH 45215 (US)
 • CALDERAS, Jonathan, Javier
   Cincinnati, OH 45220 (US)
 • SCHAFERMEYER, Richard, Gerald
   Cincinnati, OH 45231 (US)
 • CHRISTMAS, Kevin, Patrick
   Mason, OH 45040 (US)

(74) Representative: Kremer, Véronique Marie
Joséphine et al
Procter & Gamble Service GmbH
Sulzbacher Strasse 40-50
65824 Schwalbach am Taunus (DE)

(56) References cited:
WO-A-99/38390          US-A- 3 433 644
US-A- 3 533 805        US-A- 5 582 351

 • DATABASE WPI Derwent Publications Ltd.,
   London, GB; AN 2000-245675, XP002217372
   BONDAREVA ED, DENISYUK EN, VOROBEVA
   VM: 'Concentrate of vitamin-and-mineral
   beverage' & RU 2 125 818 C 20 August 1997

**Description**

The present invention relates to essentially dry compositions that are suitable for use as foods and / or beverages.

BACKGROUND OF THE INVENTION

Dry compositions that are intended for further dilution with a liquid such as water are commonly known in the art. For example, many beverage compositions are commercially available as powders and are suitable for further dilution at the point of consumption. Such compositions are convenient, particularly due to their relatively low expense and portability. However, for such compositions to be successful in the marketplace, it is important that these compositions are readily soluble. This is particularly important wherein the compositions contain vitamins or minerals, since the nutritional value of such compositions is dependent upon complete solubility and ultimate ingestion of such vitamins and minerals. Additionally, with good reason, consumers tend to be adverse to nutritional compositions that are not pleasing to the eye or are not palatable.

Aspartame or other high intensity sweeteners can be quite useful in dry compositions. Unfortunately, dry compositions containing these intense sweeteners tend to exhibit solubility problems due to poor wetting and / or poor dispersibility. For example, it is commonly known that aspartame is a relatively insoluble material when added to water. It would, therefore, be advantageous to provide dry compositions containing such sweeteners that are readily soluble in liquids such as water.

The present inventors have discovered essentially dry compositions which exhibit consistently good solubility despite the presence of relatively insoluble, poorly wetting, or hydrophobic, ingredients. Contrary to the general opinions of the industry, the present inventors have discovered that the solubility of such relatively insoluble ingredients in the essentially dry compositions is actually enhanced by increasing particle size. In particular, the compositions of the present invention have enhanced dispersibility when added to a liquid (*e.g.*, water) and, therefore, enhanced solubility by virtue of the defined particle size of the sweetener therein. For example, with relation to aspartame, the inventors have discovered that providing a defined amount of aspartame (as described herein) having a relatively large particle size actually increases the dispersibility of the essentially dry composition in water and, therefore, increases the solubility of such aspartame and the resulting essentially dry composition. This occurs even wherein the aspartame is not bound or coated with any agent (*e.g.*, a hydrophilic agent such as citric acid or maltodextrin) and is, therefore, a discrete particle. Without intending to be limited by theory, the ease of dispersibility or solubilization of the essentially dry composition is likely a function of the amount of high intensity sweetener fines (*i.e.*, particles having a particle size of less than about 106 microns). A high level of these relatively hydrophobic fines makes it difficult for water to penetrate through the pores of the powder matrix, which may contribute to poor dispersibility or solubility of the composition when added to a liquid (*e.g.*, water). The amount of these fine particles can be a result of the relative energy input and resulting degree of attrition experienced by the intense sweetener during mixing of the ingredients of the composition. For example, the higher the energy input, the greater the potential for attrition of the intense sweetener particles, thereby yielding a relatively high level of high intensity sweetener fines and, as discovered herein, decreased solubility of the composition.

The present finding is in contrast to the guidance of the literature. For example, WO 97/45025, Tsau, published December 4, 1997, discloses that the dissolution rate of aspartame in aqueous solution actually decreases with increasing aspartame particle size. The proposed solution set forth in WO 97/45025 utilizes the formation of a thin relatively water-soluble coating on the surface of the aspartame powder particle to bind such particles. It is stated that the thin binder coating improves the dispersibility and wettability of the fine aspartame powder particles.

Further conventional sweetening compositions are disclosed in WO-A-99/38390; US 6 039 275; US 3, 433, 644 and Rn 2, 125, 818.

As set forth herein, the present inventors have discovered essentially dry compositions that overcome the problems associated with previous compositions. This and other advantages of the present invention will be discussed further herein.

SUMMARY OF THE INVENTION

The present invention relates to essentially dry compositions that are suitable for use as foods and / or beverages. Preferably, the essentially dry compositions are beverage compositions, wherein the compositions are diluted with a liquid prior to consumption. In a key benefit of the present invention, the compositions exhibit consistently good solubility despite the presence of relatively insoluble ingredients.

In one embodiment of the present invention, essentially dry compositions are provided which comprise:

a) from 0.001% to 25% of a high intensity sweetener, by weight of the composition, wherein at least about 50% of the total high intensity sweetener, by weight, comprises discrete high intensity sweetener particles having a particle size of greater than about 106 microns; and
b) less than about 96% of a bulking agent, by weight of the composition; wherein the composition is suitable for use as a food or beverage.

In another embodiment of the present invention, the essentially dry compositions comprise:

a) from 0.001% to 25% of a high intensity sweetener, by weight of the composition, wherein at least about 82% of the high intensity sweetener, by weight, comprises particles having a particle size of greater than about 106 microns; and
b) less than about 96% of a bulking agent, by weight of the composition;

wherein the composition is suitable for use as a food or beverage.
In yet another embodiment of the present invention, essentially dry compositions are described which comprise:

a) a nutrient selected from the group consisting of magnesium, iron, iodine, zinc, selenium, chromium, copper, fluorine, and mixtures thereof; and
b) from 0.001% to 25% of a high intensity sweetener, by weight of the composition, wherein at least about 50% of the high intensity sweetener, by weight, comprises particles having a particle size of greater than about 106 microns;

wherein the composition is suitable for use as a food or beverage.
In other embodiments, the high intensity sweetener having the foregoing limitations is specifically aspartame. Methods of providing sweetened, essentially dry compositions having consistent solubility are also described.

DETAILED DESCRIPTION OF THE INVENTION

Publications and patents are referred to throughout this disclosure. All references cited herein are hereby incorporated by reference.
All percentages and ratios are calculated by weight unless otherwise indicated. All percentages and ratios are calculated based on the total composition unless otherwise indicated.
As used herein, the total amount of any given component includes any added component as well as any of the components inherently present in the composition by virtue of inclusion of additional ingredients in the composition inherently containing the component.
Referred to herein are trade names for components including various ingredients utilized in the present invention. The inventors herein do not intend to be limited by materials under a certain trade name. Equivalent materials (*e.g.*, those obtained from a different source under a different name or catalog number) to those referenced by trade name may be substituted and utilized in the compositions and methods herein.
In the description of the invention various embodiments and / or individual features are disclosed. As will be apparent to the ordinarily skilled practitioner, all combinations of such embodiments and features are possible and can result in preferred executions of the present invention.
The compositions, devices, and methods herein may comprise, consist essentially of, or consist of any of the elements as described herein.

The Compositions of the Present Invention

The present compositions are essentially dry compositions that are suitable for use as foods and / or beverages. Preferably, the essentially dry compositions are beverage compositions, wherein the compositions are diluted with a liquid (*e.g.*, water) prior to consumption.
In a key benefit of the present invention, the essentially dry compositions exhibit consistently good solubility despite the presence of relatively insoluble, poorly wetting, or hydrophobic, ingredients. As used herein, the terms "solubility," "soluble," and the like refer to the ease of dispersion and dissolution of the essentially dry composition, and is a function of wettability, dispersion and scum, without agitation. The Solubility Grade Measurement method described herein further describes these properties.
Contrary to the general opinions of the industry, the present inventors have discovered that the solubility of such relatively insoluble ingredients in the essentially dry compositions is actually enhanced by increasing particle size of the high intensity sweetener therein. In particular, the compositions of the present invention have enhanced dispersibility when added to a liquid (*e.g.*, water) and, therefore, enhanced solubility by virtue of the defined particle size of the high intensity sweetener. For example, with relation to aspartame, the inventors have discovered that providing a defined amount of aspartame (as described herein) having a relatively large particle size actually increases the dispersibility of the essentially dry composition in water and, therefore, the solubility of such aspartame and the resulting essentially dry composition. This occurs even wherein the aspartame is not bound or coated with any agent (*e.g.*, a hydrophilic agent such as citric acid or maltodextrin) and is, therefore, a discrete particle. Without intending to be limited by theory, the ease of dispersibility or solubilization of the essentially dry composition is likely a function of the amount of high intensity sweetener fines (*i.e.*, particles having a particle size of less than about 106 microns). A high level of these relatively hydrophobic fines makes it difficult for water to penetrate through the pores of the powder matrix, which may contribute to poor dispersibility or solubility of the composition when added to a liquid (*e.g.*, water). The amount of these fine particles can be a result of the relative energy input and resulting degree of attrition experienced by the intense sweetener during mixing of the ingredients of the composition. For example, the higher the energy input, the greater the potential for attrition of the intense sweetener particles, thereby yielding a relatively high level of high intensity sweetener fines and, as discovered herein, decreased solubility of the composition.

In one embodiment of the present invention, essentially dry compositions are provided which comprise:

a) from 0.001% to 25% of a high intensity sweetener, by weight of the composition, wherein at least about 50% of the high intensity sweetener, by weight, comprises discrete particles having a particle size of greater than about 106 microns; and
b) less than about 96% of a bulking agent, by weight of the composition; wherein the composition is suitable for use as a food or beverage.

In another embodiment of the present invention, the essentially dry compositions comprise:

a) from 0.001% to 25% of a high intensity sweetener, by weight of the composition, wherein at least about 82% of the high intensity sweetener, by weight, comprises particles having a particle size of greater than about 106 microns; and
b) less than about 96% of a bulking agent, by weight of the composition; wherein the composition is suitable for use as a food or beverage.

In yet another embodiment of the present invention, essentially dry compositions are described which comprise:

a) a nutrient selected from the group consisting of magnesium, iron, iodine, zinc, selenium, chromium, copper, fluorine, and mixtures thereof; and
b) from 0.001% to 25% of a high intensity sweetener, by weight of the composition, wherein at least about 50% of the high intensity sweetener, by weight, comprises particles having a particle size of greater than about 106 microns; wherein the composition is suitable for use as a food or beverage.

With regard to the foregoing embodiments, the high intensity sweetener refers to the total high intensity sweetener contained within the composition. In yet other preferred embodiments, the high intensity sweetener having the foregoing limitations is specifically aspartame. For example, in yet another embodiment of the present invention, essentially dry compositions are provided which comprise:

a) from 0.001% to 25% of aspartame, by weight of the composition, wherein at least about 50% of the aspartame, by weight, comprises discrete aspartame particles having a particle size of greater than about 106 microns; and
b) less than about 96% of a bulking agent, by weight of the composition; wherein the composition is suitable for use as a food or beverage.

In even another embodiment of the present invention, the essentially dry compositions comprise:

a) from 0.001% to 25% of aspartame, by weight of the composition, wherein at least about 82% of the aspartame, by weight, comprises particles having a particle size of greater than about 106 microns; and
b) less than about 96% of a bulking agent, by weight of the composition; wherein the composition is suitable for use as a food or beverage.

In still another embodiment of the present invention, essentially dry compositions are described which comprise:

a) a nutrient selected from the group consisting of magnesium, iron, iodine, zinc, selenium, chromium, copper, fluorine, and mixtures thereof; and
b) from 0.001% to 25% of aspartame, by weight of the composition, wherein at least about 50% of the aspartame, by weight, comprises particles having a particle size of greater than about 106 microns; wherein the composition is suitable for use as a food or beverage.

As used herein, the term "essentially dry" with reference to the composition means that the composition comprises less than about 15% water, by weight of the composition. Preferably, the term "essentially dry" means that the composition comprises less than about 10% water, more preferably less than about 5% water, and most preferably less than about 3% water, all by weight of the composition. Of course, wherein the essentially dry compositions are actually used by the consumer as a beverage, it is most preferred that such compositions (when in use) are ultimately diluted with a liquid, preferably an aqueous fluid such as water.

The various components utilized in the embodiments are described below, together with preferable limitations and combinations thereof.

High Intensity Sweetener

Each embodiment of the present invention comprises one or more high intensity sweeteners. High intensity sweeteners are well-known in the art. As used herein, a high intensity sweetener will have a relative sweetening intensity (RSI) which is at least about 5 times that of sucrose; preferably 10 times, more preferably 20 times, even more preferably 50 times, and most preferably 100 times that of sucrose. Relative sweetening intensities of various sweeteners are well-known in the art as in, for example, *Advances. in Sweeteners,* Ed. T.H. Grrenby (1996) and O'Brien Nabors *et al.*, *Alternative Sweeteners,* Second Ed., Marcel Dekker Publishers (1991). The high intensity sweetener is useful for providing a sweet flavor, with minimal or no caloric contribution, to the essentially dry composition.

Preferably, the high intensity sweetener is selected from dihydrochalcones (RSI about 300 to 2000 times that of sucrose), glycyrrhizin (RSI about 50 to 100 times that of sucrose), hernandulcin (RSI about 1000 times that of sucrose), monellin (RSI about 1500 to 2000 times that of sucrose), lo han guo, thaumatin (RSI about 2000 to 3000 times that of sucrose), stevioside (RSI about 300 times that of sucrose), acesulfame K (RSI about 200 times that of sucrose), dipeptide sweeteners, sucralose (RSI about 600 times that of sucrose), saccharin (RSI about 300 times that of sucrose), cyclamates (RSI about 30 times that of sucrose), alitame (RSI about 2000 times that of sucrose), and mixtures thereof. More preferably, the high intensity sweetener is selected from lo han guo, stevioside, acesulfame K, aspartame (RSI about 180 times that of sucrose), sucralose, saccharin, and mixtures thereof. Even more preferably, the high intensity sweetener is selected from acesulfame K, aspartame, sucralose, and mixtures thereof. Most preferably, the high intensity sweetener is selected from aspartame, acesulfame K, and mixtures thereof. A highly preferred high intensity sweetener is aspartame.

For example, dipeptide sweeteners are well-known in the art. See e.g., U.S. Patent Nos. 3,492,131; 3,475,403; 4,399,163; 4,411,925; 4,692,512; 5,480,668; and 6,077,962. Dipeptide sweeteners include derivatives of dipeptides such as those disclosed in the foregoing patents. Preferred dipeptide sweeteners include aspartame (N-L-alpha-aspartyl-phenylalanine-1-methyl ester) and neotame (N-[N-(3,3-dimethylbutyl)-L-alpha-aspartyl]-L-phenylalanine-1-methyl ester). The most preferred dipeptide sweetener is aspartame.

Naturally occurring sweeteners or their purified extracts, such as stevioside, the protein sweetener thaumatin, lo han guo (disclosed in, for example, Fischer *et al.*, U.S. Patent No. 5,433,965, issued July 18, 1995), and the like can likewise be utilized as the high intensity sweetener herein.

Sucralose is also particularly preferred for use herein. Sucralose has little to no effect on sugar or carbohydrate metabolism, blood glucose elevation, or insulin production. Sucralose is commercially available from, for example, McNeil Specialty Products Company, New Brunswick, New Jersey.

Non-limiting examples of other high intensity sweeteners include dihydrochalcones, hernandulcin, monellin, alitame, saccharin, cyclamates, acesulfame K, L-aspartyl-hydroxymethyl alkane amide sweeteners such as, for example, those disclosed in Brand, U.S. Patent No. 4,338,346, issued 1982, L-aspartyl-1-hydroxyethylalkane amide sweeteners such as, for example, those disclosed in Rizzi, U.S. Patent No. 4,423,029, issued 1983, glycyrrhizins, and synthetic alkoxy aromatics.

Preferably, particularly in certain embodiments of the present invention, the essentially dry compositions comprise from about 0.001% to about 25% of the high intensity sweetener (*i.e.*, the total high intensity sweetener, including any mixtures thereof), by weight of the composition. More preferably, the compositions comprise from about 0.1% to about 10% of the high intensity sweetener, by weight of the composition. Even more preferably, the compositions comprise from about 0.1% to about 3% of the high intensity sweetener, by weight of the composition. It is particularly preferred that the compositions comprise from about 0.3% to about 2% of the high intensity sweetener, by weight of the composition.

Carbohydrate sweeteners such as, for example, glucose, dextrose, sucrose, fructose, xylose, galactose, mannose, lactose, maltose, isomalt, isomaltose, lactitol, maltitol, mannitol, sorbitol, xylitol, maltodextrin, fructooligosaccharides, and others well-known in the art, are therefore not high intensity sweeteners as used herein (these examples have relative sweetening intensities of about 2 times greater than sucrose, or less (*e.g.*, fructose has a relative sweetening intensity of about 1.2 to about 1.7 times greater than sucrose). However, the present inventors do not intend to exclude the use of such sweeteners from the essentially dry composition. Indeed, as discussed herein below, the various embodiments of the present invention may often comprise a "bulking agent," which may include one or more of the foregoing examples, in addition to the high intensity sweetener defined herein.

Particle Size of the High Intensity Sweetener

The high intensity sweetener utilized herein comprises particles having a defined particle size, in accordance with the discoveries of the present invention. As stated, optionally the measured particles are "discrete particles." As used herein, the term "discrete particles" refers to high intensity sweetener particles that are not bound, coated, or otherwise physically agglomerated with any agent (for example, a hydrophilic agent such as citric acid or maltodextrin), except that a given high intensity sweetener may be agglomerated with itself and still remain a discrete particle under this invention.

In particular, at least about 50%. of the total high intensity sweetener in the composition, by weight, comprises high intensity sweetener particles (optionally, discrete high intensity sweetener particles) having a particle size greater than about 106 microns. Preferably, at least about 75% of the total high intensity sweetener of the composition, by weight, comprises high intensity sweetener particles (optionally, discrete high intensity sweetener particles) having a particle size greater than about 106 microns. More preferably, at least about 82% of the total high intensity sweetener of the composition, by weight, comprises high intensity sweetener particles (optionally, discrete high intensity sweetener particles) having a particle size greater than about 106 microns. Even more preferably, at least about 87% of the total high intensity sweetener of the composition, by weight, comprises high intensity sweetener particles (optionally, discrete high intensity sweetener particles) having a particle size greater than about 106 microns. Most preferably, at least about 92% of the total high intensity sweetener of the composition, by weight, comprises high intensity sweetener particles (optionally, discrete high intensity sweetener particles) having a particle size greater than about 106 microns.

Alternatively or additionally, at least about 50% of the total high intensity sweetener of the composition, by weight, comprises high intensity sweetener particles (optionally, discrete high intensity sweetener particles) having a particle size greater than about 150 microns. Preferably, at least about 75% of the total high intensity sweetener of the composition, by weight, comprises high intensity sweetener particles (optionally, discrete high intensity sweetener particles) having a particle size greater than about 150 microns. More preferably, at least about 82% of the total high intensity sweetener of the composition, by weight, comprises high intensity sweetener particles (optionally, discrete high intensity sweetener particles) having a particle size greater than about 150 microns. Most preferably, at least about 87% of the total high intensity sweetener of the composition, by weight, comprises high intensity sweetener particles (optionally, discrete high intensity sweetener particles) having a particle size greater than about 150 microns.

It has also been discovered that in the most optimal compositions herein, less than about 10% of the total high intensity sweetener of the composition, by weight, comprises particles (optionally, discrete high intensity sweetener particles) having a particle size of less than about 45 microns. Even more preferably, less than about 8% of the total high intensity sweetener of the composition, by weight, comprises particles (optionally, discrete high intensity sweetener particles) having a particle size of less than about 45 microns. Most preferably, less than about 5% of the total high intensity sweetener of the composition, by weight, comprises particles (optionally, discrete high intensity sweetener particles) having a particle size of less than about 45 microns.

Bulking Agent

With respect to certain embodiments herein, the essentially dry compositions may (optionally) further comprise a bulking agent. The bulking agent is selected from the group consisting of sugars, sugar alcohols, oligosaccharides, and polysaccharides each having a relative sweetening intensity (RSI) of less than about 5 times the sweetening intensity of sucrose, as well as mixtures thereof. Again, relative sweetening intensities of various sweeteners are well-known in the art as in, for example, *Advances in Sweeteners,* Ed. T.H. Grenby (1996) and O'Brien Nabors *et al., Alternative Sweeteners,* Second Ed., Marcel Dekker Publishers (1991). The bulking agent utilized herein is suitable for providing, for example, bulk and / or further sweetness to the composition.

Non-limiting examples of bulking agents include monosaccharides and disaccharides (*e.g.*, glucose (RSI about 0.5 to 0.8 times that of sucrose), dextrose, sucrose (RSI of one), and fructose (RSI about 1.2 to 1.7 times that of sucrose)), maltodextrin, sugar alcohols, and fructooligosaccharides. The most preferred bulking agent is sucrose.

Preferred fructooligosaccharides are a mixture of fructooligosaccharides composed of a chain of fructose molecules linked to a molecule of sucrose. Preferred fructooligosaccharides may be obtained by enzymatic action of fructosyltransferase on sucrose such as those which are, for example, commercially available from Beghin-Meiji Industries, Neuilly-sur-Seine, France.

Other non-limiting examples of such bulking agents include sugar alcohols, which are preferred due to their ability to provide sweetness, but without the calories and glycemic contribution of sugar. Non-limiting examples of well-known polyols for such use as bulking agents include erythritol (RSI about 0.7 times that of sucrose), mannitol (RSI about 0.7 times that of sucrose), isomalt (RSI about 0.5 times that of sucrose), lactitol (RSI about 0.4 times that of sucrose), maltitol (RSI about 0.8 times that of sucrose), sorbitol (RSI about 0.6 times that of sucrose), and xylitol (RSI about equal to sucrose).

Erythritol is a particularly preferred bulking agent for use herein. Erythritol is a polyol which is commonly used as a bulk sweetener in reduced calorie foods. Erythritol provides a RSI about 0.7 times that of sucrose, and about 5% of the calories relative to sucrose. Mannitol, isomalt, lactitol, maltitol, sorbitol, and / or xylitol, for example, may be similarly utilized in the present compositions to provide the bulk of traditional sugars with exceedingly less caloric intake and blood sugar contribution.

Preferably, the compositions comprise less than about 96% of the total bulking agent, by weight of the composition. More preferably, the compositions comprise from about 50% to about 93% of the total bulking agent, by weight of the composition. Even more preferably, the compositions comprise from about 70% to about 93% of the total bulking agent, by weight of the composition. Most preferably, the compositions comprise from about 75% to about 88% of the total bulking agent, by weight of the composition.

Nutrient

As set forth above, some of the embodiments and / or preferred variations of those embodiments, include a nutrient. Such nutrients are well-known in the art. Preferably, the nutrients are selected from vitamin A, vitamin B, biotin, vitamin C, vitamin D, vitamin E, vitamin K, calcium, phosphorous, magnesium, potassium, iron, iodine, selenium, chromium, copper, fluorine, zinc, and mixtures thereof. In more preferred embodiments, the essentially dry compositions comprise a mineral selected from magnesium, iron, iodine, zinc, selenium, chromium, copper, fluorine, and mixtures thereof. Particularly preferred among these minerals are magnesium, iron, iodine, zinc, and mixtures thereof. Even more preferred among these minerals are iron, iodine, zinc, and mixtures thereof. Iron is a highly preferred mineral for use herein. Calcium, phosphorous, and potassium are also highly preferred minerals for use herein, with calcium being particularly preferred. It is alternatively or additionally preferred to utilize one or more vitamins selected from vitamin A, riboflavin, niacinamide, vitamin $B_6$, folate, vitamin $B_{12}$, vitamin C, vitamin E, and mixtures thereof. In preferred embodiments, two or more of these vitamins and minerals are utilized. In even more preferred embodiments, three or more of these vitamins and minerals are utilized.

Unless otherwise specified herein, wherein a given vitamin is present in the essentially dry composition, a single-serving of the composition (typically, about 9 grams of the essentially dry composition, which upon use is preferably diluted with about 200 milliliters of liquid) comprises at least about 1%, preferably at least about 2%, more preferably from about 2% to about 200%, even more preferably from about 5% to about 150%, and most preferably from about 10% to about 120% of the USRDI of such vitamin. The United States Recommended Daily Intake (USRDI) for vitamins is defined and set forth in the Recommended Daily Dietary Allowance-Food and Nutrition Board, National Academy of Sciences-National Research Council.

As used herein, unless otherwise noted, recitations of the amount of any given nutrient refers to the amount of the nutrient itself, and not to any other materials or molecular components which may compose the commercial form of the nutrient (for example, if tricalcium phosphate is used as a calcium source, the amount of the calcium nutrient refers to the amount of calcium in the tricalcium phosphate, and not the total amount of the tricalcium phosphate ingredient).

The ordinarily skilled artisan will understand that the quantity of vitamin or mineral to be added is dependent on processing conditions and the amount of nutrient delivery desired after storage (dependent on, for example, time, temperature, and type of packaging material utilized).

As used herein, "vitamin A" is inclusive of one or more nutritionally active unsaturated hydrocarbons, including the retinoids (a class of compounds including retinol and its chemical derivatives having four isoprenoid units) and the carotenoids.

Non-limiting examples of retinoids include retinol, retinal, retinoic acid, retinyl palmitate, retinyl propionate, and retinyl acetate.

Common carotenoids include, for example, *beta*-carotene, *alpha*-carotene, *beta*-apo-8'-carotenal, cryptoxanthin, canthaxanthin, astacene, and lycopene. Among these, *beta*-carotene is preferred.

Vitamin A is available is several physical forms which can have different levels of potency. Preferred forms for use herein are powders or dry forms which incorporate the vitamin A within the structure of a particle. These forms may contain antioxidants and other ingredients that help to protect the vitamin A from oxidation. This includes, but is not limited to, dry forms made by spray drying or fluid bed drying.

Because different vitamin A sources can have different potencies, it is customary to describe the vitamin A levels present in a given composition in terms of International Units (IU), where 1 IU is the amount of vitamin A provided by 0.3 micrograms of retinol. Using this definition of IU, 1 milligram of retinol provides 3333 IU of vitamin A, while one milligram of retinyl palmitate provides 1817 IU of vitamin A.

Wherein vitamin A is utilized in the essentially dry compositions, the compositions preferably comprise from about 200 IU to about 500,000 IU, more preferably from about 400 IU to about 500,000 IU, even more preferably from about 1700 IU to about 400,000 IU, and most preferably from about 5000 IU to about 75000 IU of the vitamin A, per 100 grams of the essentially dry composition.

As used herein, wherein the term "vitamin B" is used, it is meant to include one or more of the variety of known B vitamins. Vitamin B is well-known in the art. The B vitamins include one or more of thiamin (also commonly referred to as "vitamin $B_1$"), riboflavin (also commonly referred to as "vitamin $B_2$"), niacin (also commonly referred to as "vitamin $B_3$"), pantothenic acid (also commonly referred to as "vitamin $B_5$"), pyridoxine (also commonly referred to as "vitamin $B_6$"), biotin, folic acid (also commonly referred to as folate), the cobalamins (also commonly referred to as "vitamin $B_{12}$"), and orotic acid (also commonly referred to as "vitamin $B_{13}$"). It is most preferred to use riboflavin, folic acid, vitamin $B_3$, and / or vitamin $B_6$.

Wherein vitamin B is utilized in the essentially dry compositions, the compositions preferably comprise from about 0.2 micrograms to about 2000 milligrams, more preferably from about 0.5 micrograms to about 2000 milligrams, even more preferably from about 2 micrograms to about 1500 milligrams, and most preferably from about 6 micrograms to about 300 milligrams of the vitamin B, per 100 grams of the essentially dry composition.

As used herein, "vitamin C" is inclusive of one or more of L-ascorbic acid (also referred to herein as ascorbic acid), as well as their bioequivalent forms including salts and esters thereof. For example, the sodium salt of ascorbic acid is considered vitamin C herein. Additionally, there are many widely known esters of vitamin C, including ascorbyl acetate. Fatty acid esters of vitamin C are lipid soluble and can provide an antioxidative effect.

The vitamin C utilized may be in any form, for example, free or in encapsulated form. It is highly preferred herein to utilize free vitamin C, for example, as ascorbic acid.

Wherein vitamin C is utilized in the essentially dry compositions, the compositions preferably comprise from about 2 milligrams to about 6000 milligrams, more preferably from about 4 milligrams to about 6000 milligrams, even more preferably from about 20 milligrams to about 4500 milligrams, and most preferably from about 60 milligrams to about 1500 milligrams of the vitamin C, per 100 grams of the essentially dry composition.

As used herein, "vitamin E" is inclusive of one or more tocols or tocotrienols which exhibit vitamin activity similar to that of *alpha*-tocopherol (which, as used herein, is considered a tocol) as well as their bioequivalent forms including salts and esters thereof. Vitamin E is typically found in oils including, for example, sunflower, peanut, soybean, cottonseed, corn, olive, and palm oils. The vitamin E utilized may be in any form, for example, free or in encapsulated form. Preferred forms are dry powders which incorporate the vitamin E within the structure of the particles. This includes, but is not limited to, dry forms made by spray drying or fluid bed drying.

Non-limiting examples of vitamin E include *alpha*-tocopherol, *beta*-tocopherol, *gamma*-tocopherol, and *delta*-tocopherol, as well as esters thereof (*e.g.*, alpha-tocopheryl acetate and alpha-tocopheryl succinate). *Alpha*-tocopheryl acetate is highly preferred for use as vitamin E herein.

Because different vitamin E sources can have different potencies, it is customary to describe the vitamin E levels in terms of International Units (IU), where 1 IU is the amount of vitamin E in 1 milligram of synthetic D,L-*alpha*-tocopheryl acetate. One milligram of the natural form D-*alpha*-tocopherol provides 1.49 IU of vitamin E.

Wherein vitamin E is utilized in the essentially dry compositions, the compositions preferably comprise from about 1 IU to about 3000 IU, more preferably from about 2 IU to about 3000 IU, even more preferably from about 5 IU to about 2300 IU, and most preferably from about 10 IU to about 500 IU of the vitamin E, per 100 grams of the essentially dry composition.

Unless otherwise specified herein, wherein a given mineral is present in the essentially dry composition, a single-serving of the composition (typically, about 9 grams of the essentially dry composition, which upon use is preferably diluted with about 200 milliliters of liquid) comprises at least about 1%, preferably at least about 2%, more preferably from about 5% to about 100%, even more preferably from about 5% to about 75%, and most preferably from about 10% to about 50% of the USRDI of such mineral. The United States Recommended Daily Intake (USRDI) for mineral is defined and set forth in the Recommended Daily Dietary Allowance-Food and Nutrition Board, National Academy of Sciences-National Research Council.

Calcium is a particularly preferred mineral for use in the present invention. Preferred sources of calcium include, for example, amino acid chelated calcium, calcium carbonate, calcium oxide, calcium hydroxide, calcium sulfate, calcium chloride, calcium phosphate, calcium hydrogen phosphate, tricalcium phosphate, calcium dihydrogen phosphate, calcium citrate, calcium malate, calcium gluconate, calcium acetate, and calcium lactate, and in particular calcium citrate-malate. The form of calcium citrate-malate is described in, *e.g.,* Mehansho *et al.*, U.S. Patent No. 5,670,344, issued September 23, 1997; Diehl *et al.*, U.S. Patent No. 5,612,026, issued March 18, 1997; Andon *et al.*, U.S. Patent No. 5,571,441, issued November 5, 1996; Meyer *et al.*, U.S. Patent No. 5,474,793, issued December 12, 1995; Andon *et al.*, U.S. Patent No. 5,468,506, issued November 21, 1995; Burkes *et al.*, U.S. Patent No. 5,445,837, issued August 29, 1995; Dake *et al.*, U.S. Patent No. 5,424,082, issued June 13, 1995; Burkes *et al.*, U.S. Patent No. 5,422,128, issued June 6, 1995;

Burkes *et al.*, U.S. Patent No. 5,401,524, issued March 28, 1995; Zuniga *et al.*, U.S. Patent No. 5,389,387, issued February 14, 1995; Jacobs, U.S. Patent No. 5,314,919, issued May 24, 1994; Saltman *et al.*, U.S. Patent No. 5,232,709, issued August 3, 1993; Camden *et al.*, U.S. Patent No. 5,225,221, issued July 6, 1993; Fox *et al.*, U.S. Patent No. 5,215,769, issued June 1, 1993; Fox *et al.*, U.S. Patent No. 5,186,965, issued February 16, 1993; Saltman *et al.*, U.S. Patent No. 5,151,274, issued September 29, 1992; Kochanowski, U.S. Patent No. 5,128,374, issued July 7, 1992; Mehansho *et al.*, U.S. Patent No. 5,118,513, issued June 2, 1992; Andon *et al.*, U.S. Patent No. 5,108,761, issued April 28, 1992; Mehansho *et al.*, U.S. Patent No. 4,994,283, issued February 19, 1991; Nakel *et al.*, U.S. Patent No. 4,786,510, issued November 22, 1988; and Nakel *et al.*, U.S. Patent No. 4,737,375, issued April 12, 1988.

Wherein calcium is utilized in the essentially dry compositions, the compositions preferably comprise from about 40 milligrams to about 15,000 milligrams, more preferably from about 80 milligrams to about 10,000 milligrams, even more preferably from about 200 milligrams to about 5000 milligrams, and most preferably from about 300 milligrams to about 1000 milligrams of calcium, per 100 grams of the essentially dry composition.

As used herein, "zinc" is inclusive of any compound containing zinc, including a salt, complex, or other form of zinc, including elemental zinc. Acceptable forms of zinc are well-known in the art. The zinc which can be used in the present invention can be in any of the commonly used forms such as, *e.g.*, zinc lactate, zinc sulfate, zinc chloride, zinc acetate, zinc gluconate, zinc ascorbate, zinc citrate, zinc aspartate, zinc picolinate, amino acid chelated zinc, and zinc oxide. Zinc gluconate and amino acid chelated zinc are particularly preferred. Additionally, it has been found that amino acid chelated zinc is most highly preferred, as this zinc form provides optimized bioavailability of the zinc. Zinc oxide is also particularly preferred.

Amino acid chelates of zinc are well-known in the art, and are described in, for example, Pedersen *et al.*, U.S. Patent No. 5,516,925, assigned to Albion International, Inc., issued May 14, 1996; Ashmead, U.S. Patent No. 5,292,729, assigned to Albion International, Inc., issued March 8, 1994; and Ashmead, U.S. Patent No. 4,830,716, assigned to Albion International, Inc., issued May 16, 1989. These chelates contain one or more natural amino acids selected from alanine, arginine, asparagine, aspartic acid, cysteine, cystine, glutamine, glutamic acid, glycine, histidine, hydroxyproline, isoleucine, leucine, lysine, methionine, ornithine, phenylalanine, proline, serine, threonine, tryptophan, tyrosine and valine or dipeptides, tripeptides or tetrapeptides formed by any combination of these amino acids.

Additionally, encapsulated zinc is also preferred for use herein.

Wherein zinc is utilized in the essentially dry compositions, the compositions preferably comprise from about 0.6 milligrams to about 1000 milligrams, more preferably from about 1 milligram to about 750 milligrams, even more preferably from about 5 milligrams to about 500 milligrams, and most preferably from about 15 milligrams to about 100 milligrams of zinc, per 100 grams of the essentially dry composition.

Iron is particularly preferred for use herein. As used herein, "iron" is inclusive of any compound containing iron, including a salt, complex, or other form of iron, including elemental iron. Acceptable forms of iron are well-known in the art.

Non-limiting examples of ferrous iron sources which can be used in the present invention include ferrous sulfate, ferrous fumarate, ferrous succinate, ferrous gluconate, ferrous lactate, ferrous tartrate, ferrous citrate, ferrous amino acid chelates, and ferrous pyrophsophate, as well as mixtures of these ferrous salts. While ferrous iron is typically more bioavailable, certain ferric salts can also provide highly bioavailable sources of iron. Non-limiting examples of ferric iron sources that can be used in the present invention are ferric saccharate, ferric ammonium citrate, ferric citrate, ferric sulfate, ferric chloride, and ferric pyrophosphate, as well as mixtures of these ferric salts. A particularly preferred ferric iron source is ferric pyrophosphate, for example, microencapsulated SUNACTIVE Iron (for example, SUNACTIVE Fe12 Superdispersion (preferred) and SUNACTIVE P80 Powder, commercially available from Taiyo International, Inc., Edina, Minnesota, U.S.A and Yokkaichi, Mie, Japan). SUNACTIVE Iron is particularly preferred for use herein due to its water-dispersibility, particle size, compatibility, and bioavailability.

Ferrous amino acid chelates particularly suitable as highly bioavailable amino acid chelated irons for use in the present invention are those having a ligand to metal mole ratio of at least 2:1. For example, suitable ferrous amino acid chelates having a ligand to metal mole ratio of 2:1 are those of formula:

$$Fe(L)_2$$

where L is an alpha amino acid, dipeptide, tripeptide or tetrapeptide reacting ligand. Thus, L can be any reacting ligand that is a naturally occurring alpha amino acid selected from alanine, arginine, asparagine, aspartic acid, cysteine, cystine, glutamine, glutamic acid, glycine, histidine, hydroxyproline, isoleucine, leucine, lysine, methionine, ornithine, phenylalanine, proline, serine, threonine, tryptophan, tyrosine and valine or dipeptides, tripeptides or tetrapeptides formed by any combination of these amino acids. See e.g., Pedersen *et al.*, U.S. Patent No. 5,516,925, assigned to Albion International, Inc., issued May 14, 1996; Ashmead, U.S. Patent No. 5,292,729, assigned to Albion International, Inc., issued March 8, 1994; and Ashmead, U.S. Patent No. 4,830,716, assigned to Albion International, Inc., issued May 16, 1989. Particularly preferred ferrous amino acid chelates are those where the reacting ligands are glycine, lysine, and leucine. Most preferred is ferrous bis-glycinate, which is the ferrous amino acid chelate sold under the trade name FERROCHEL having the reacting ligand as glycine. FERROCHEL is commercially available from Albion Laboratories, Salt Lake City, Utah.

In addition to these highly bioavailable ferrous and ferric salts, other sources of bioavailable iron can be included in the compositions of the present invention. Other sources of iron particularly suitable for fortifying compositions herein include certain iron-sugar-carboxylate complexes. In these iron-sugar-carboxylate complexes, the carboxylate provides the counterion for the ferrous (preferred) or ferric iron. The overall synthesis of these iron-sugar-carboxylate complexes involves the formation of a calcium-sugar moiety in aqueous media (for example, by reacting calcium hydroxide with a sugar, reacting the iron source (such as ferrous ammonium sulfate) with the calcium-sugar moiety in aqueous media to provide an iron-sugar moiety, and neutralizing the reaction system with a carboxylic acid (the "carboxylate counterion") to provide the desired iron-sugar-carboxylate complex). Sugars that can be used to prepare the calcium-sugar moiety include any of the ingestible saccharidic materials, and mixtures thereof, such as glucose, sucrose and fructose, mannose, galactose, lactose, maltose, and the like, with sucrose and fructose being the more preferred. The carboxylic acid providing the "carboxylate counterion" can be any ingestible carboxylic acid such as citric acid, malic acid, tartaric acid, lactic acid, succinic acid, and propionic acid, as well as mixtures of these acids.

These iron-sugar-carboxylate complexes can be prepared in the manner described in Nakel *et al.*, U.S. Patent No. 4,786,510 and 4,786,518, issued November 22, 1988. These materials are referred to as "complexes", but they may, in fact, exist in solution as complicated, highly hydrated, protected colloids; the term "complex" is used for the purpose of simplicity.

Additionally, encapsulated iron is also preferred for use herein. For example, ferrous sulfate encapsulated in a hydrogenated soybean oil matrix may be used, for example, CAP-SHURE which is commercially available from Balchem Corp., Slate Hill, N.Y. Other solid fats can be used to encapsulate the iron, such as, tristearin, hydrogenated corn oil, cottonseed oil, sunflower oil, tallow, and lard. A particularly preferred encapsulated iron source is microencapsulated SUNACTIVE Iron, commercially available from Taiyo International, Inc., Edina, Minnesota, U.S.A. SUNACTIVE Iron is particularly preferred for use herein due to its water-dispersibility, particle size, compatibility, and bioavailability.

Wherein iron is utilized in the essentially dry compositions, the compositions preferably comprise from about 0.7 milligrams to about 1200 milligrams, more preferably from about 1 milligrams to about 1000 milligrams, even more preferably from about 6 milligrams to about 700 milligrams, and most preferably from about 18 milligrams to about 150 milligrams of iron, per 100 grams of the essentially dry composition.

As used herein, "iodine" is inclusive of any compound containing iodine, including a salt, complex, or other form of iodine, including elemental iodine. Acceptable forms of iodine are well-known in the art. Non-limiting examples of iodine forms include potassium iodide, sodium iodide, potassium iodate, and sodium iodate.

Wherein iodine is utilized in the essentially dry compositions, the compositions preferably comprise from about 6 micrograms to about 15,000 micrograms, more preferably from about 12 micrograms to about 10,000 micrograms, even more preferably from about 50 micrograms to about 5000 micrograms, and most preferably from about 150 micrograms to about 1000 micrograms of iodine, per 100 grams of the essentially dry composition.

Concentrates and Ready-to-Drink Beverage Compositions Prepared from the Essentially Dry Compositions

The essentially dry compositions described herein may be used to prepare beverage concentrates (including syrups) and ready-to-drink beverage compositions. Such concentrates and beverage compositions are prepared by solubilizing the essentially dry composition in a liquid such as water and mixing as appropriate.

Concentrates will typically comprise from about 1% to about 80% of the essentially dry composition, preferably from about 5% to about 70%, all by weight of the concentrate. Ready-to-drink beverage compositions will preferably comprise from about 0.01% to about 30% of the essentially dry composition, by weight of the ready-to-drink beverage. More preferably, ready-to-drink beverage compositions will preferably comprise from about 1% to about 15% of the essentially dry composition, by weight of the ready-to-drink beverage. Most preferably, ready-to-drink beverage compositions will preferably comprise from about 3% to about 10% of the essentially dry composition, by weight of the ready-to-drink beverage. Ready-to-drink beverages comprising from about 3% to about 6% of the essentially dry composition, by weight of the ready-to-drink beverage, are particularly preferred.

Concentrates and ready-to-drink beverage compositions will typically comprise water. Preferably, beverage concentrates comprise from about 5% to about 70% water, by weight of the concentrate. Preferably, ready-to-drink beverage compositions comprise from about 70% water to about 99.99% water, by weight of the ready-to-drink beverage. More preferably, ready-to-drink beverage compositions will comprise from about 85% to about 99% water, by weight of the ready-to-drink beverage. Most preferably, ready-to-drink beverage compositions will comprise from about 90% to about 97% water, by weight of the ready-to-drink beverage.

Optional Components of the Present Compositions

As stated, the compositions of the present invention are essentially dry compositions which may be utilized to prepare concentrates or ready-to-drink beverage compositions. Consistent with this use, the compositions of the present invention may comprise other optional components to enhance, for example, their performance in providing a desirable nutritional profile, and / or providing enhanced organoleptic properties. For example, one or more thickeners, flavoring agents, coloring agents, preservatives, acidulants, and / or the like may be included in the compositions herein. Such optional components may be dispersed or otherwise mixed into the present compositions. These components may be added to the compositions herein, preferably if they do not substantially hinder the properties of the composition, particularly the flavor profile of the composition. Non-limiting examples of optional components suitable for use herein are given below.

Thickeners

One or more thickeners may be optionally added to the present compositions to, for example, provide control of viscosity and / or texture. Various thickeners are well-known in the art. Non-limiting examples of thickeners include cellulose compounds, gum ghatti, modified gum ghatti, xanthan gum, tragacanth gum, guar gum, gellan gum, locust bean gum, pectin, and mixtures thereof. See e.g., Kupper et al., U.S. Patent No. 4,705,691, issued November 10, 1987. Particularly preferred for use herein include xanthan gum, gellan gum, guar gum, and cellulose compounds.

Cellulose compounds are widely known in the art. Cellulose compounds are typically anionic polymers derived from cellulose. Non-limiting examples of cellulose compounds utilized herein include carboxy methylcellulose, methylcellulose, hydroxypropylmethylcellulose, hydroxyethylcellulose, and hydroxypropylcellulose. The most preferred cellulose compound for use in the present compositions is carboxymethylcellulose, particularly sodium carboxymethylcellulose. Non-limiting examples of cellulose compounds include sodium carboxymethylcellulose (commercially available as AQUALON 7HOF from Hercules, Inc., Wilmington, Delaware).

When present, the thickener is typically utilized in the present compositions at levels preferably from about 0.00001% to about 10%, more preferably from about 0.0001% to about 5%, still more preferably from about 0.001% to about 5%, even more preferably from about 0.01% to about 3%, and most preferably from about 0.1% to about 2%, by weight of the composition.

Flavoring Agents

One or more flavoring agents are recommended for the embodiments of the present invention in order to enhance their palatability. Any natural or synthetic flavor agent can be used in the present invention. For example, it is highly preferred to include one or more botanical flavors, fruit flavors, and / or dehydrated fruit juices. Thus, the flavor agent can also comprise a blend of various flavoring agents.

As is commonly known in the art, flavor agents may be included in a variety of well-known forms, often identified by their manufacturing process. For example, spray-dried flavor agents, agglomerated flavor agents, spray-dried agglomerated flavor agents, granulated flavor agents, extruded flavor agents, encapsulated flavor agents, or mixtures thereof may be used. Encapsulated flavor agents include, for example, coacervated and spray-immersion flavor agents. As non-limiting examples, spray-dried flavor agents are commercially available from International Flavors and Fragrances Inc., Dayton, N.J., for example Orange SN050690. As a further example, spray-dried agglomerated granulated flavor agents are commercially available from Mane Inc., Milford, OH, for example, Orange WONF CB46806 and MSD Powder E9928164. Additionally, extruded flavor agents are commercially available from Firmenich Inc., Princeton, N.J., for example, Peach DURAROME 860.011/TDB 05.94 and other DURAROME flavor agents.

In certain preferred embodiments of the present invention, the flavor agent comprises particles of relatively large size. As has been discovered herein, such relatively large particles are important for further improving the aqueous solubility of the essentially dry composition. Accordingly, it is particularly preferred to include a flavor agent having a particle size of greater than about 106 microns, and even more preferably greater than about 150 microns. Spray-dried agglomerated granulated flavor agents and extruded flavor agents tend to be commercially available in such relatively larger particle sizes and thus would often be preferred.

Any of a variety of dehydrated fruit juices may be incorporated herein including, for example, apple, strawberry, lemon, grapefruit, kiwi, lime, grape, tangerine, orange, cherry, raspberry, cranberry, peach, watermelon, passion fruit, pineapple, mango, cupuacu, guava, cocoa, papaya, and apricot fruit juices, as well as mixtures thereof, may be used.

Fruit flavors may also be used. Particularly preferred fruit flavors are apple, strawberry, lemon, grapefruit, kiwi, lime, grape, tangerine, orange, cherry, raspberry, cranberry, peach, watermelon, and the like, as well as mixtures thereof. Blends of flavors (for example, tangerine-orange) are most preferred. Exotic and lactonic flavors such as, for example, passion fruit, pineapple, mango, cupuacu, guava, cocoa, papaya, and apricot, as well as mixtures thereof, may also be utilized. These fruit flavors can be derived from natural sources such as fruit juices and flavor oils, or may alternatively be synthetically prepared.

Preferred botanical flavors include, for example, tea (preferably black and green tea, most preferably green tea), aloe vera, guarana, ginseng, ginkgo, hawthorn, hibiscus, rose hips, chamomile, peppermint, fennel, ginger, licorice, lotus seed, schizandra, saw palmetto, sarsaparilla, safflower, St. John's Wort, curcuma, cardimom, nutmeg, cassia bark, buchu, cinnamon, jasmine, haw, chrysanthemum, water chestnut, sugar cane, lychee, bamboo shoots, vanilla, coffee, and the like. Preferred among these are tea, guarana, ginseng, ginko, and coffee. In particular, the combination of tea flavors, preferably green tea or black tea flavors (preferably green tea), optionally together with fruit flavors has an appealing taste. In another preferred embodiment, coffee is included within the present compositions. A combination of green tea and coffee in the present compositions is often preferred.

Coloring Agent

Small amounts of one or more coloring agents may be utilized in the compositions of the present invention. FD&C dyes (*e.g.*, yellow #5, blue #2, red # 40) and / or FD&C lakes are preferably used. Preferred lakes which may be used in the present invention are the FDA-approved lakes, such as Lake red #40, yellow #6, blue #1, and the like. Additionally, a mixture of FD&C dyes or FD&C lakes in combination with other conventional food colorants may be used. Beta-carotene may also be used. Additionally, other natural coloring agents may be utilized including, for example, fruit, vegetable, and / or plant extracts such as grape, black currant, aronia, carrot, beetroot, red cabbage, and hibiscus.

The amount of coloring agent used will vary, depending on the agents used and the intensity desired in the fmished product. The amount can be readily determined by one skilled in the art. Generally, if utilized, the coloring agent should be present at a level of from about 0.0001% to about 1%, preferably from about 0.001% to about 0.7%, and most preferably from about 0.004% to about 0.3%, by weight of the essentially dry composition.

Preservatives

Preservatives may or may not be needed for use in the present essentially dry compositions. Preferred preservatives include, for example, sorbate, benzoate, and polyphosphate preservatives (for example, sodium hexametapolyphosphate).

Preferably, wherein a preservative is utilized herein, one or more sorbate or benzoate preservatives (or mixtures thereof) are utilized. Sorbate and benzoate preservatives suitable for use in the present invention include sorbic acid, benzoic acid, and salts thereof, including (but not limited to) calcium sorbate, sodium sorbate, potassium sorbate, calcium benzoate, sodium benzoate, potassium benzoate, and mixtures thereof. Sorbate preservatives are particularly preferred. Potassium sorbate is particularly preferred for use in the present invention.

Acidulants

Preferably, the present compositions may optionally comprise one or more acidulants. An amount of an acidulant may be used to maintain the pH of the composition upon dilution with water or other aqueous liquid. Typically, acidity is a balance between maximum acidity for microbial inhibition and optimum acidity for the desired beverage flavor.

Organic as well as inorganic edible acids may be used to adjust the pH of the composition. The acids can be present in their undissociated form or, alternatively, as their respective salts, for example, potassium or sodium citrate, potassium or sodium hydrogen phosphate, potassium or sodium dihydrogen phosphate, or tricalcium phosphate salts. The preferred acids are edible organic acids including, for example, citric acid, malic acid, fumaric acid, adipic acid, gluconic acid, tartaric acid, ascorbic acid, acetic acid, or mixtures thereof. The most preferred acids are citric and malic acids. The acidulant can also serve as an antioxidant to stabilize beverage components. Examples of commonly used antioxidants include but are not limited to ascorbic acid, EDTA (ethylenediaminetetraacetic acid), citric acid, and salts thereof.

Typically, wherein an acidulant is included in the essentially dry compositions, the composition comprises from about 0.001% to about 50% of the acidulant, by weight of the composition. More preferably, the composition comprises from about 1% to about 15% of the acidulant, by weight of the composition. Most preferably, the composition comprises from about 3% to about 10% of the acidulant, by weight of the composition.

Methods of Making

The present invention is further directed to methods of preparing compositions described herein. In one embodiment, the present invention relates to methods of preparing an essentially dry composition suitable for use as a food or beverage comprising:

a) providing a first ingredient set;
b) providing a second ingredient set comprising from 0.001% to 25% of a high intensity sweetener, by weight of the composition; and
c) combining the first set of ingredients and the second set of ingredients;

wherein after providing the second ingredient set, the second ingredient set is subjected to less than about 6 kJ / kg of work input. Preferably, after providing the first ingredient set, the first ingredient set is subjected to about 4 kJ / kg or greater, (more preferably about 8 kJ / kg or greater) of work input. Also preferably, after providing the second ingredient set, the second ingredient set is subjected to less than about 4 kJ / kg of work input.

In this respect, any work input is additive once a given ingredient set is provided. For example, the first ingredient set may be "worked" prior to combination with the second ingredient set. In this instance, the work input relative to the first ingredient set is expressed as kilojoules per kilogram (kJ/kg) of the first ingredient set. Once the first ingredient set is combined with the second ingredient set, the first ingredient set may be subjected to work input, resulting in the first ingredient set being further "worked." After this combination, the work input relative to the first ingredient set is expressed as kilojoules per kilogram of the combination (*i.e.*, the essentially dry composition). The first ingredient set is thus subjected to the additive work inputs, *i.e.*, the total calculated work input prior to, and after, combination with the second ingredient set. This same example is applicable when calculating the work input relative to the second ingredient set. The method of actual work input measurement whether prior to, or after, combination of the first and second ingredient sets, is described herein below in the analytical methods section.

Thus, wherein work is performed on the two ingredient sets after combination, the work per kilogram performed on each ingredient set after this combination is considered to be equivalent to the work per kilogram performed on the entire composition after this combination.

Most preferably, the first ingredient set is subjected to greater work input relative to the second ingredient set. This may be accomplished, for example, by adding the second ingredient set late in the addition process relative to the first ingredient set. Measurement of work input is described herein below in the analytical methods section.

The first ingredient set may include one or more ingredients that are not sensitive to work input with regard to solubility. For guidance, such ingredients are relatively soluble ingredients such as glucose, dextrose, sucrose, fructose, and organic acids such as citric acid. Vitamins and / or minerals are often included. The second ingredient set may include one or more ingredients that are work-sensitive with regard to solubility.

By "work-sensitive" it is meant that such ingredients, when subjected to mechanical work, undergo a change in physical property such that it is more difficult to disperse and solubilize the ingredient, and the resulting entire composition, in water. For example, without intending to be limited by theory, subjecting the essentially dry composition to a high level of mechanical work during mixing of the ingredients may result in significant attrition of certain ingredient particles that are relatively insoluble, poorly wetting, or hydrophobic in nature. This, in turn, may result in a relatively high level of fine particles (*i.e.*, particles having a size of less than 106 microns) that are poorly wetting; these particles may contribute to poor dispersibility and solubilization of the essentially dry composition when added to a liquid (*e.g.*, water). By providing a second ingredient set comprising these work-sensitive ingredients that is subjected to relatively low work input during mixing, the potential for attrition of the work-sensitive ingredients is minimized, thereby yielding good dispersibility and solubilization when the essentially dry composition is added to the liquid.

As has been disclosed herein, aspartame and other high intensity sweeteners; as well as flavor agents, may be work-sensitive ingredients. As such, the second ingredient set comprises a high intensity sweetener as defined herein (for example, aspartame). Flavor agents are also typically included in the second set of ingredients, as it has been discovered that inclusion of flavor agents, particularly citrus flavors or other hydrophobic flavor agents, can exacerbate the insolubility of other work-sensitive ingredients.

Thus, this invention provides a method of mixing ingredients where some of the ingredients need a relatively high level of work input to achieve desired product attributes, while also achieving good solubility with lower work input on work sensitive ingredients.

In another embodiment herein, the present invention relates to methods of preparing an essentially dry composition suitable for use as a food or beverage comprising combining:

a) from 0.001% to 25% of a high intensity sweetener, by weight of the composition, wherein at least about 50% of the total high intensity sweetener, by weight, comprises discrete high intensity sweetener particles having a particle size of greater than about 106 microns; and
b) less than about 96% of a bulking agent, by weight of the composition;

wherein the composition exhibits an Average Solubility Grade of about 5 or greater (wherein the Average Solubility Grade is determined as set forth below).

The preferred limitations described herein are applicable to this embodiment.

The present compositions can also be made according to methods that will be well known by the ordinarily skilled artisan.

As examples applicable to all methods of making, the compositions of the present invention may be prepared by mixing together of several raw material ingredients. These ingredients would include the required ingredients defined herein, as well as any optional ingredients including those described herein and, of course, further optional ingredients not described herein, depending upon the desired final composition.

It is preferable that the resulting essentially dry composition has low variability with respect to the various ingredients used. In this respect, the consumer will have uniform flavor and taste from glass to glass when the powder is mixed with water for consumption. Of particular importance for a vitamin and mineral fortified composition is that the vitamins and minerals have sufficiently low variability so that the desired level of fortification is delivered to the consumer and that government regulatory requirements are met with respect to the fortification levels. Thus, the type of mixer used to mix the product and the operating conditions used are important considerations in the method used.

There are many types of mixers used in the dry solids processing industry. These include, but are not limited to convective mixers such as ribbon blenders, paddle mixers, plow mixers, and vertical orbiting screw mixers; tumbler mixers such as V-blenders and double cone mixers; high shear mixers such as impaction mixers, high speed impeller mixers, and various mills; and various other mixers including fluidized mixers, recirculating bin mixers, and static mixers.

As will be understood in the art, the type of mixer to use for a particular application depends on many factors, including properties of the ingredients (such as particle size, free flowing *versus* cohesive, particle friability), desired characteristics of the end product (solubility, dispersability, coefficient of variation for key constituents or properties, particle size, tendency to segregate, dustiness), cost, ease of formula changeovers, ease of cleaning, and the like.

One particular factor that the inventors have found to be important is the work input subjected by the mixer on the various ingredients during the mixing process. Work input is measured in accordance with the description set forth in the analytical methods section herein. In this invention, minimizing the work input with respect to certain work sensitive ingredients (*e.g.*, the high intensity sweeteners and flavor agents) present in the batch can be an important consideration in selection of the mixer.

Tumbler mixers require very little energy to operate and result in very little work subjected to the ingredients. However, this type of mixer may not be able to achieve certain desirable attributes, such as achieving low levels of variation for components that are present at very low levels. For example, for a vitamin and mineral fortified beverage powder, variability in the levels of the vitamins and minerals are generally too high to assure delivery of the proper amount to the consumer.

High shear mixers, on the other hand, may do a good job of mixing to achieve certain product attributes such as providing low variation in the product, but the very high energy input results in considerable work done on the product and can create high levels of fines which may significantly impair dissolution of the product in water.

It is most preferred to use convective mixers, which provide a tradeoff between work input and mixing quality. Within the class of convective mixers, ribbon blenders are highly preferred.

Ribbon blenders are widely used in the powder mixing industry and are well known to those skilled in the art. In this type of mixer a shaft runs lengthwise in a static trough. Spokes are attached perpendicular to the shaft and helical ribbons (narrow bands of metal formed in a helix) are attached to the spokes along the entire length of the blender. In a typical configuration, the blender contains one set of ribbons with a diameter just slightly smaller than the inner diameter of round section of the trough. There is usually also a second set of ribbons with a smaller diameter attached to the spokes inside of the outer ribbons. The pitch direction of the inner ribbons is reversed from that of the outer ribbons. This allows the inner ribbons to move product axially in one direction while the outer ribbons bring the product back in the opposite direction, *i.e.*, wherein an inner ribbon moves product right to left, the corresponding outer ribbon will move product left to right. Usually, the pitch of the ribbons is set so that the inner ribbons carry product away from the discharge port, while the outer ribbons bring product towards the discharge port. The rotational speeds of ribbon blenders are typically from 15 RPM to 100 RPM depending on blender size, with larger blenders rotating at slower speeds.

The following describes a non-limiting example of the use of a ribbon blender to make a composition as described by this invention:

A variety of manufacturers make ribbon blenders of various sizes. Two such blenders are a 55 cubic foot ribbon blender and an 11 cubic foot blender made by the American Process Systems, Gurnee, IL. As a non-limiting example, the following steps may be used to make a batch in this blender.

In this example, the first ingredient set contains sucrose as the bulking agent. The second ingredient set contains aspartame and flavor agents:

1. The first ingredient set is added to the ribbon blender.

    a) About 50% of the sucrose is added to the blender.
    b) The other ingredients in the first ingredient set are added to the blender.

c) The remaining sucrose is added to the blender.

2. The blender is run at the RPM and number of revolutions needed to achieve the desired product attributes such as a low level of variability for key constituents.
3. The second ingredient set (aspartame and flavor agents) is added to the blender.
4. The blender is then run for a number of revolutions such that the amount of work subjected to the batch by the blender is less than about 4 kJ/kg.
5. The composition is then discharged from the blender into a suitable storage device.

Following the mixing of the batch in the blender, the product may be packed into suitable packaging using processes and equipment known to those skilled in the art. To maintain an acceptable low level of variability for key constituents, it may be necessary to pack the composition in a manner such that segregation or additional work input of the product is minimized.

Analytical Methods

The following analytical methods may be utilized to further characterize the present invention. In particular, work input measurement, particle size measurement, and Solubility Grade measurement are described:

Work Input Measurement

As used herein, work input is defined as the energy per unit mass (*e.g.*, kJ/kg or BTU/lb) input into the bulk ingredients in a mixing device during mixing as a result of the displacement of the bulk ingredients *via* a force acting on the ingredients (*e.g.*, the force applied by the ribbons of a ribbon blender as these ribbons rotate and move the ingredients). Work input is not intended to include (or be limited by) localized points of higher or lower energy per unit mass or to attempt to account for dissipation of energy from the bulk composition in the form of heat transfer or other means.

For example, using an electrically operated mixer, work input is measured with respect to the electrical power used by the mixer over the time the mixer is running (*e.g.*, using a power meter). The energy per unit mass is a function of mixer geometry, mixer rotational speed, mass of product charged to the mixer, and total mixing time.

For example, the following procedure is used to measure the amount of work done by a ribbon blender on its contents. A power meter (FLUKE Model 41B Power Harmonics Analyzer, Fluke Corporation, Everett, WA (or equivalent)) is connected to the electric circuit feeding the ribbon blender. The power meter is also connected to a laptop computer using a serial cable. While the blender is running, power readings from the power meter are downloaded into an Excel spreadsheet using FLUKE VIEW 41 Windows (version 3.2) software (or equivalent) supplied with the power meter. The time interval between power readings is determined by the Sample Rate setting with the FLUKE VIEW software and can be set to 10 seconds or greater. Typically, the Sample Rate is set to 10 or 20 seconds.

Work input is calculated from power measurements as follows. With ingredients loaded into the blender, power measurements are made over the time the ribbon blender is mixing the ingredients. The average power for the loaded blender (P) is then calculated.

It is also necessary to obtain power measurements when the blender is empty while running at the same RPM. This provides the power needed to overcome the friction between parts of the blender causing resistance to movement. The average power for the empty blender ($P_e$) is calculated.

Work input is therefore calculated by the formula:

$$W = \frac{60(P - P_e)t}{M}$$

wherein:

W = Work input on the ingredients by the blender (kJ/kg)
P = average electrical power measured while blender is mixing ingredients (kilowatts, kW)
$P_e$ = average electrical power while empty blender runs at same RPM (kW)
t = time ingredients in blender are mixed (minutes)
M = mass of contents in blender (kilograms, kg).

Particle Size Measurement

Particle size of the high intensity sweetener in the essentially dry composition of the present invention is measured as follows:

Measurement of the high intensity sweetener level in the essentially dry composition: The level of high intensity sweetener in the composition is measured by first preparing a reconstituted beverage. Forty-five grams (45.0 g) of the essentially dry composition is accurately weighed and added to 970 grams of water, followed by mixing to dissolve the solids. The resulting beverage is filtered through a 25 millimeter syringe filter with a 0.45 micron nylon membrane (ACRODISC #4438, Pall Gelman Laboratory, Ann Arbor, MI) and the high intensity sweetener concentration (parts per million (ppm)) is measured by an analytical method appropriate for the specific high intensity sweetener or sweeteners utilized in the essentially dry composition.

For example, when aspartame and / or acesulfame K are utilized as all or part of the high intensity sweetener, the following analytical method is used. Reverse-phase gradient High-Performance Liquid Chromatography (HPLC) is used to resolve aspartame and / or acesulfame K from other sample matrix components. Detection is by absorbance of ultraviolet light at 215 nanometers (nm). Analysis of standards of known concentration permits quantification.

The details of this HPLC method are as follows:

a) A stainless steel column packed with C-18 (octadecylsilyl) coated porous silica microspheres is used: Supelcosil LC-18DB 33 mm long, 4.6 mm internal diameter, 3 micron particle size (Supelco Inc., Bellefonte, PA, part number 26770-05);

b) The gradient contains two solvents: Solvent "A" is a solution of Potassium Dihydrogen Phosphate (0.025M) in a 1:99 (v/v) mixture of acetonitrile and water. Solvent "B" is a 70:30 (v/v) mixture of acetonitrile and water. An equilibration time of about 3 minutes to about 5 minutes is maintained between injections;

c) The HPLC may include an autosampler capable of injecting 5 microliters of sample, a pump capable of reproducibly forming a precise gradient having two solvents (binary gradient, see Table I below), a column oven capable of maintaining a constant temperature of 40 °C, a detector capable of monitoring absorbance of UV light at 215 nanometers, and a suitable data system for generating results.

Table I. Gradient Program for Analysis

| Time, minutes | Solvent A, % | Solvent B, % |
|---|---|---|
| 0.0 | 100 | 0 |
| 2.0 | 100 | 0 |
| 2.2 | 95 | 5 |
| 7.0 | 30 | 70 |
| 8.0 | 100 | 0 |

d) Calibration standards are prepared using reagent grade aspartame obtained from Sigma Chemical Corp. (Sigma # A5139; St. Louis, MO) and / or acesulfame K obtained from Fluka Chemical Corp. (Fluka #04054; Ronkonkoma, NY), as appropriate. A stock solution is prepared by dissolving an accurately weighed sample in dilute acid (*e.g.,* hydrochloric) and diluting to a known volume with water. Working standards are prepared by making precise dilutions of the stock solution in water. In practice, calibration sets consisting of four working standards ranging from 50 to 500 parts per million (ppm) aspartame and / or 5 to 50 ppm acesulfame K are made.

e) To convert ppm of high intensity sweetener in the reconstituted beverage (equivalent to micrograms (mcg) of high intensity sweetener per gram (g) of beverage) to milligrams (mg) of high intensity sweetener per gram (g) of essentially dry composition (and thereby, ultimately, percent of high intensity sweetener, by weight of the composition), multiply the ppm value by the factor 0.02256. For example,

$$[mg\ high\ intensity\ sweetener\ /\ g\ essentially\ dry\ composition]_{BULK} =$$

$$(mcg/g\ beverage)\ x\ (1{,}015\ g\ beverage\ /\ 45\ g\ essentially\ dry\ composition)\ x\ (1\ mg\ /\ 1{,}000\ mcg)$$

*or,*

$$[\text{mg high intensity sweetener / g essentially dry composition}]_{BULK} =$$
$$(\text{ppm high intensity sweetener}) \ x \ (0.02256)$$

Sieving of the essentially dry composition to yield particle fractions (i.e., particles that pass through a 140 mesh sieve (less than 106 microns) and through a 325 mesh sieve (less than 45 microns): Sieving of the essentially dry composition is conducted using a 140 mesh sieve (U.S.A. Standard Testing Sieve, No. 140, 106 micron openings, commercially available from VWR Scientific, West Chester, PA) and a 325 mesh sieve (U.S.A. Standard Testing Sieve, No. 325, 45 micron openings, commercially available from VWR Scientific, West Chester, PA) according to the following procedure:

a) A single sieve (140 mesh or 325 mesh, as appropriate) is stacked onto a bottom pan. Forty-five grams of the essentially dry composition are accurately weighed to the nearest 0.1 gram and loaded onto the surface of the sieve;

b) A top cover is placed onto the sieve and the entire assembly (bottom pan, plus sieve, plus top cover) is placed onto an automated shaker (*e.g.*, Portable Sieve Shaker or RO-Tap Test Sieve Shaker, commercially available from W.S. Tyler, Inc., Mentor, OH, or equivalent) and locked into place;

c) The automated shaker is started and allowed to run for 15 minutes at room temperature (about 70 °F; 21.1 °C);

d) The shaker is stopped and the bottom pan carefully separated from the sieve. The fine particles that have passed through the openings in the sieve, ending up in the bottom pan, are carefully collected, weighed to the nearest 0.1 g, and retained for analysis.

e) The weight percent (%) of each particle fraction in the essentially dry composition is calculated as follows:

$$\% \text{ Particle fraction through 140 mesh (less than 106 } \mu m) =$$
$$100 \ x \ (\text{weight of particle fraction in pan}) \ / \ (\text{weight of essentially dry composition})$$

$$\% \text{ Particle fraction through 325 mesh (less than 45 } \mu m) =$$
$$100 \ x \ (\text{weight of particle fraction in pan}) \ / \ (\text{weight of essentially dry composition})$$

f) Steps a) through e) are repeated four times to collect a sufficient amount of each fine particle fraction (*i.e.*, through 140 mesh and through 325 mesh) to analyze for the level of high intensity sweetener. The resulting four calculated values of "*% Particle fraction through 140 mesh*" are averaged. The resulting four calculated values of "*% Particle fraction through 325 mesh*" are averaged.

Measurement of the high intensity sweetener level in each particle fraction (*i.e.*, less than 106 microns and less than 45 microns): Each particle fraction is added to separate quantities of water in the same solid to liquid ratio as described above (*e.g.*, 45.0 grams particle fraction in 970 grams water, or 4.5 grams particle fraction in 97.0 grams water, or 1.0 grams particle fraction in 21.56 grams water, or equivalent ratio of particle fraction to water). The resulting reconstituted beverages are mixed to dissolve the solids and filtered through a 25 mm syringe filter with a 0.45 micron nylon membrane (ACRODISC #4438, Pall Gelman Laboratory, Ann Arbor, MI). The concentration of high intensity sweetener (parts per million; ppm) in the respective beverages is then measured using the same analytical method described above.

To convert ppm of high intensity sweetener (equivalent to micrograms high intensity sweetener / gram reconstituted beverage) to *mg high intensity sweetener / g fine particle fraction*, multiply the ppm value for each reconstituted beverage by the factor 0.02256. For example,

$$[\text{mg high intensity sweetener / g particle fraction}]_{THROUGH\ 140\ MESH\ OR\ 325\ MESH} =$$
$$(\text{mcg/g beverage}) \ x \ (22.56 \text{ g beverage / 1.0 g particle fraction}) \ x \ (1 \text{ mg / 1,000 mcg})$$

*or,*

$$[\textit{mg high intensity sweetener / g particle fraction}]_{\textit{THROUGH 140 MESH OR 325 MESH}} =$$
$$(\textit{ppm high intensity sweetener}) \ x \ (0.02256)$$

To convert the level of high intensity sweetener in the particle fractions to an essentially dry composition basis, multiply the respective *[mg high intensity sweetener / g fine particle fraction]* values calculated above by the corresponding average *% particle fraction* (as above) in the essentially dry composition, and divide by 100. For example, for the "through 140 mesh" particle fraction (less than 106 microns), the level of high intensity sweetener on an essentially dry composition basis is calculated as follows:

$$[\textit{mg high intensity sweetener / g essentially dry composition}]_{\textit{THROUGH 140 MESH}} =$$
$$[\textit{mg high intensity sweetener / g particle fraction}]_{\textit{THROUGH 140 MESH}}$$

$$x \ (\textit{% particle fraction through 140 mesh}) \ / \ 100$$

For the "through 325 mesh" particle fraction (less than 45 microns), the level of high intensity sweetener on an essentially dry composition basis is calculated as follows:

$$[\textit{mg high intensity sweetener / g essentially dry composition}]_{\textit{THROUGH 325 MESH}} =$$
$$[\textit{mg high intensity sweetener / g particle fraction}]_{\textit{THROUGH 325 MESH}}$$
$$x \ (\textit{% particle fraction through 325 mesh}) \ / \ 100$$

<u>Calculation of high intensity sweetener particle size:</u> Calculation of the % of total high intensity sweetener in various particle size ranges (less than 106 micron; less than 45 micron; and greater than 106 micron) of the essentially dry composition is performed as follows:

$$\textit{% OF TOTAL HIGH INTENSITY SWEETENER less than 106 micron} =$$
$$\frac{100 \ x \ [\textit{mg high intensity sweetener / g essentially dry composition}]_{\textit{THROUGH 140 MESH}}}{[\textit{mg high intensity sweetener / g essentially dry composition}]_{\textit{BULK}}} \ (i.e., \text{``divided by''})$$

$$\textit{% OF TOTAL HIGH INTENSITY SWEETENER less than 45 micron} =$$
$$\frac{100 \ x \ [\textit{mg high intensity sweetener / g essentially dry composition}]_{\textit{THROUGH 325 MESH}}}{[\textit{mg high intensity sweetener / g essentially dry composition}]_{\textit{BULK}}} \ (i.e., \text{``divided by''})$$

$$\% \textit{ OF TOTAL HIGH INTENSITY SWEETENER greater than 106 micron} =$$

$$100 - (\% \text{ OF } \textit{TOTAL HIGH INTENSITY SWEETENER less than 106 micron})$$

As one of ordinary skill in the art will recognize, the weight percent of total high intensity sweetener having a particle size greater than 150 microns, is determined following the above steps using a 100 mesh sieve (U.S.A. Standard Testing Sieve, No. 100, 150 micron openings, VWR Scientific, West Chester, PA) instead of the 140 mesh sieve.

Solubility Grade Measurement

As used herein, the Solubility Grade of a given composition is measured using a standardized method for the evaluation of solubility of essentially dry compositions. This standardized method may be utilized for any essentially dry composition.

Generally, the essentially dry composition is dropped through a funnel into water and graded for solubility as a function of wettability, dispersion and scum, without agitation. The Solubility Grade is correlated to visual observations of a given number of humans ordinarily skilled in the art of visual grading. Although graders ordinarily display many different habits for releasing powder into water by varying the rate of addition, angle of addition, addition quantity, etc, this method standardizes the releasing process in order to compare various compositions. For this reason, it is important to calibrate graders to the reference scale used to determine Solubility Grade and perform replicates of each essentially dry composition.

The Solubility Grade method used herein is a function of wettability, dispersibility, and surface scum, as these three factors all contribute to the overall solubility of a given composition.

As used herein, the term "wettability" refers to the degree to which powder absorbs water as defined in the grading scale below. Generally, compositions having high wettability show no signs of clumping. Generally, compositions having low wettability form stacked columns and clumps.

As used herein, the term "dispersion" refers to the degree to which powder spreads out in water as defined in the grading scale below. Generally, highly dispersable compositions take the form of a cone when released into water. Generally, low dispersable compositions drop straight into the water and reach the bottom with a diameter not much larger than the diameter when they were added to the water.

As used herein, the term "scum" refers to unwet powder on surface of the water, or unsightly clumps and / or film as defined in the grading scale below.

Average Solubility Grade Procedure:

The following equipment is utilized to determine the Solubility Grade of a given essentially dry composition. Other equipment may be useful as readily determined by one of ordinary skill in the art:

    a) Beaker (1-Liter, *e.g.*, Pyrex No. 1000, VWR 13912-604);
    b) Funnel (1.4 cm ID outlet, 12.5 cm ID inlet, 10 cm height);
    c) Ring stand having ring capable of holding funnel (*e.g.*, VWR 60110-200, 60120-124).

The following materials are utilized:

    a) 45 grams of the test composition (*e.g.*, essentially dry composition of the present invention);
    b) distilled water (correct usage quantity to provide 1 liter of diluted test composition at 20 °C).

The equipment is set-up as follows. The beaker is filled with the aforementioned usage quantity of water and placed next to the ring stand. The funnel is placed in the ring connected to the stand such that the bottom of the funnel is 4.5 centimeters above the surface of the water. The funnel is placed directly in the center of the beaker.

All test compositions for analysis are randomized and graded blind using standard coding techniques. For each test composition 5 humans (graders) ordinarily skilled in the art of visual grading and solubility of dry matter are used to evaluate the test composition(s). For each test composition, the analysis is performed three times (trials). The 5 graders view and analyze the same three trials of a given test composition. The three Individual Solubility Grades assigned by each grader for a given test composition are averaged to give the Average Solubility Grade for that test composition. Thus, for each composition, 15 Individual Solubility Grades will be determined and the Average Solubility Grade for the test composition will be the total of the Individual Solubility Grades for the test composition divided by the number 15.

Each individual analysis is performed as follows. The 45 grams of test composition and the usage quantity of distilled water are measured (typically, the usage quantity of distilled water will be about 970 grams). The funnel is stoppered and the test composition is loaded into the funnel. The test composition is released into the beaker. Within 30 seconds from when last of the test composition contacts the water, the Individual Solubility Grade for that test composition is assessed by each grader by using the Individual Solubility Grade Rating Scale forth below. Two further individual analyses are performed and the Average Solubility Grade is determined.

Individual Solubility Grade Rating Scale:

Each Individual Solubility Grade is determined as follows:

$$\text{Individual Solubility Grade} = [2 * \text{Wetting Score}] + \text{Dispersion Score} + \text{Surface Scum Score}$$

The Wetting Score is determined as follows:

Wetting Score of 0: The essentially dry composition is non-wetting; the composition forms clumps or stacked columns of residue that have not dissipated at the time of score determination.
Wetting Score of 1: The essentially dry composition is moderately wetting; the composition initially forms some clumps or stacked columns of residue, which dissipate at the time of score determination.
Wetting Score of 2: The essentially dry composition wets easily; the composition does not form clumps or stacked columns of residue.

The Dispersion Score is determined as follows:

Dispersion Score of 0: The essentially dry composition has poor dispersion; the composition flows straight through water to bottom of beaker.
Dispersion Score of 1: The essentially dry composition has fair dispersion; the powder spreads somewhat through composition.
Dispersion Score of 2: The essentially dry composition has good dispersion; the composition spreads evenly throughout beaker (and wherein coloring agents are present in the composition, the water becomes evenly colored at the time of score determination).

The Surface Scum Score is determined as follows:

Surface Scum Score of 0: The essentially dry composition results in significant surface scum, as well as residue clinging to beaker.
Surface Scum Score of 1: The essentially dry composition results in minor surface scum or minor residue clinging to beaker.
Surface Scum Score of 2: The essentially dry composition results in no surface scum and no residue clinging to beaker.
The preferred essentially dry compositions of the present invention exhibit an Average Solubility Grade of 5 or greater, more preferably 6 or greater, and most preferably 7 or greater.

Examples

The following are examples of the present compositions that may be prepared utilizing conventional methods. The following examples are provided to illustrate the invention.

Example 1

Four essentially dry compositions suitable for use as a beverage composition are prepared containing the following ingredients in the indicated amounts (indicated in terms of weight percent):

|  | Example 1A | Example 1B | Example 1C | Example 1D |
|---|---|---|---|---|
| Bulking Agent (Granulated Sugar) | 82.0 | 86.4 | 86.9 | 81.6 |

(continued)

|  | Example 1A | Example 1B | Example 1C | Example 1D |
|---|---|---|---|---|
| Citric Acid | 8.7 | 7.1 | 7.1 | 7.5 |
| Vitamins/Minerals* | 2.06 | 2.05 | 2.06 | 1.94 |
| Xanthan Gum | 0.42 | 0.92 | 0.42 | 0.83 |
| Acesulfame K | 0.08 | 0.08 | 0.08 | 0.08 |
| Colors | 0.36 | 0.27 | 0.34 | 0.17 |
| Sodium Citrate | -- | -- | -- | 2.9 |
| Aspartame | 0.72 | 0.72 | 0.74 | 0.72 |
| Tricalcium Phosphate | 1.06 | 1.06 | 1.06 | 1.06 |
| Flavors | 4.6 | 1.4 | 1.3 | 3.2 |

*The vitamins/minerals contain folic acid, vitamin $B_{12}$, vitamin $B_6$, tocopheryl acetate, iodine, niacinamide, iron, zinc, ascorbic acid, vitamin $B_2$, and vitamin A palmitate. Also included in the weight percentage are other materials or molecular components inherently present in the commercial forms of the nutrients.

Each composition is separately prepared by mixing in a ribbon blender following the procedure as described in the example in the Methods of Making section, with work input being differently allocated as described for a first ingredient set and a second ingredient set. In this example, the first ingredient set includes the bulking agent, citric acid, vitamins/minerals, xanthan gum, acesulfame K, colors, and sodium citrate. The second ingredient set includes the aspartame, tricalcium phosphate, and flavors.

Upon mixing, approximately 95% of the aspartame of Example 1A, by weight of the total aspartame present in the essentially dry composition, has a particle size greater than about 106 microns. Approximately 4.5% of the aspartame of Example 1A has a particle size less than about 45 microns.

Upon mixing, approximately 95% of the aspartame of Example 1B, by weight of the total aspartame present in the essentially dry composition, has a particle size greater than about 106 microns. Approximately 3% of the aspartame of Example 1B has a particle size less than about 45 microns.

Upon mixing, approximately 95% of the aspartame of Example 1C, by weight of the total aspartame present in the essentially dry composition, has a particle size greater than about 106 microns. Approximately 3% of the aspartame of Example 1C has a particle size less than about 45 microns.

Upon mixing, approximately 93% of the aspartame of Example 1D, by weight of the total aspartame present in the essentially dry composition, has a particle size greater than about 106 microns. Approximately 4% of the aspartame of Example 1D has a particle size less than about 45 microns.

Forty-five grams of each composition is packaged into a separate sachet. Each sachet instructs the user to add the contents of a sachet to one liter of cold water. The essentially dry composition of Example 1A exhibits an Average Solubility Grade of about 6 or greater. The essentially dry compositions of Examples 1B, 1C, and 1D each exhibit an Average Solubility Grade of about 7 or greater.

**Claims**

1. An essentially dry composition comprising:

    a) from 0.001% to 25% of a high intensity sweetener, by weight of the composition, **characterized in that** at least 50% of the total high intensity sweetener, by weight, comprises discrete high intensity sweetener particles having a particle size of greater than 106 microns; and
    b) less than 96% of a bulking agent;

    wherein the composition is suitable for use as a food or beverage.

2. A composition according to Claim 1 **characterized in that** at least 75% of the total high intensity sweetener, by weight, comprises discrete high intensity sweetener particles having a particle size of greater than 106 microns, and wherein at least one high intensity sweetener is selected from the group consisting of lo han guo, thauamatin, stevioside, acesulfame K, dipeptide sweeteners, sucralose, saccharin, and mixtures thereof.

3. A composition according to either of Claims 1 or 2 further comprising at least one nutrient selected from the group consisting of vitamin A, vitamin B, biotin, vitamin C, vitamin D, vitamin E, vitamin K, calcium, phosphorous, magnesium, potassium, iron, iodine, selenium, chromium, copper, fluorine, zinc, and mixtures thereof.

4. A composition according to any of the preceding Claims further comprising a flavor agent.

5. A composition according to any of the preceding Claims comprising from 50% to 93% of the total bulking agent, by weight of the composition, wherein the bulking agent comprises sucrose.

6. A composition according to Claim 4 wherein at least one flavor agent is selected from the group consisting of spray-dried flavor agents, agglomerated flavor agents, spray-dried agglomerated flavor agents, granulated flavor agents, extruded flavor agents, encapsulated flavor agents, and mixtures thereof.

7. A composition according to any of the preceding Claims comprising from 0.01% to 10% of the total high intensity sweetener, by weight of the composition, wherein at least one high intensity sweetener is selected from the group consisting of acesulfame K, aspartame, and sucralose.

8. An essentially dry composition according to claim 1, comprising:

a) from 0.001% to 25% of aspartame, wherein at least 82% of the aspartame, by weight, comprises particles having a particle size of greater than 106 microns; and
b) less than 96% of a bulking agent, by weight of the composition;

wherein the composition is suitable for use as a food or beverage.

**Patentansprüche**

1. Im Wesentlichen trockene Zusammensetzung, die Folgendes umfasst:

a) von 0,001 Gew.-% bis 25 Gew.-% der Zusammensetzung einen hochintensiven Süßstoff, **dadurch gekennzeichnet, dass** mindestens 50 Gew.-% des gesamten hochintensiven Süßstoffs einzelne hochintensive Süßstoffteilchen mit einer Teilchengröße von mehr als 106 Mikrometer umfassen; und
b) zu weniger als 96 % ein Füllmittel;

wobei die Zusammensetzung zur Verwendung als Lebensmittel oder Getränk geeignet ist.

2. Zusammensetzung nach Anspruch 1, **dadurch gekennzeichnet, dass** mindestens 75 Gew.-% des gesamten hochintensiven Süßstoffs einzelne hochintensive Süßstoffteilchen mit einer Teilchengröße von mehr als 106 Mikrometer umfassen, und wobei mindestens ein hochintensiver Süßstoff aus der Gruppe, bestehend aus Luo Han Guo, Thaumatin, Steviosid, Acesulfam K, Dipeptidsüßstoffen, Sucralose, Saccharin und Mischungen davon, ausgewählt ist.

3. Zusammensetzung nach einem der Ansprüche 1 oder 2, die ferner mindestens einen Nährstoff umfasst, ausgewählt aus der Gruppe, bestehend aus Vitamin A, Vitamin B, Biotin, Vitamin C, Vitamin D, Vitamin E, Vitamin K, Calcium, Phosphor, Magnesium, Kalium, Eisen, Iod, Selen, Chrom, Kupfer, Fluor, Zink und Mischungen davon.

4. Zusammensetzung nach einem der vorstehenden Ansprüche, die ferner einen Geschmacksstoff umfasst.

5. Zusammensetzung nach einem der vorstehenden Ansprüche, die das gesamte Füllmittel von 50 Gew.-% bis 93 Gew.-% der Zusammensetzung umfasst, wobei das Füllmittel Saccharose umfasst.

6. Zusammensetzung nach Anspruch 4, wobei mindestens ein Geschmacksstoff aus der Gruppe, bestehend aus sprühgetrockneten Geschmacksstoffen, agglomerierten Geschmacksstoffen, sprühgetrockneten agglomerierten Geschmacksstoffen, granulierten Geschmacksstoffen, extrudierten Geschmacksstoffen, verkapselten Geschmacksstoffen und Mischungen davon, ausgewählt ist.

7. Zusammensetzung nach einem der vorstehenden Ansprüche, die von 0,01 Gew.-% bis 10 Gew.-% der Zusammensetzung den gesamten hochintensiven Süßstoff umfasst, wobei mindestens ein hochintensiver Süßstoff aus der Gruppe, bestehend aus Acesulfam K, Aspartam und Sucralose, ausgewählt ist.

8. Im Wesentlichen trockene Zusammensetzung nach Anspruch 1, die Folgendes umfasst:

a) von 0,001 Gew.-% bis 25 Gew.-% Aspartam, wobei mindestens 82 Gew.-% des Aspartams Teilchen mit einer Teilchengröße von mehr als 106 Mikrometer umfassen; und
b) zu weniger als 96 Gew.-% der Zusammensetzung ein Füllmittel;

wobei die Zusammensetzung zur Verwendung als Lebensmittel oder Getränk geeignet ist.

**Revendications**

1. Composition pratiquement sèche comprenant:

a) de 0,001 % à 25 % d'un édulcorant de haute intensité, en poids de la composition, **caractérisé en ce qu'**au moins 50 % de l'édulcorant de haute intensité total, en poids, comprend des particules individuelles d'édulcorant de haute intensité ayant une dimension des particules supérieure à 106 microns; et
b) moins de 96 % d'un agent de gonflement;

dans laquelle la composition est appropriée pour une utilisation comme aliment ou boisson.

2. Composition selon la revendication 1, **caractérisée en ce qu'**au moins 75 % de l'édulcorant de haute intensité total, en poids, comprend des particules individuelles d'édulcorant de haute intensité ayant une dimension des particules supérieure à 106 microns, et dans laquelle au moins un édulcorant de haute intensité est choisi dans le groupe constitué de lo han guo, thaumatine, stevioside, acésulfame K, édulcorants dipeptide, sucralose, saccharine, et leurs mélanges.

3. Composition selon la revendication 1 ou 2, comprenant en outre au moins un nutriment choisi parmi le groupe constitué de vitamine A, vitamine B, biotine, vitamine C, vitamine D, vitamine E, vitamine K, calcium, phosphore, magnésium, potassium, fer, iode, sélénium, chrome, cuivre, fluor, zinc, et leurs mélanges.

4. Composition selon l'une quelconque des revendications précédentes, comprenant en outre un agent de saveur.

5. Composition selon l'une quelconque des revendications précédentes, comprenant de 50 % à 93 % de l'agent de gonflement total, en poids de la composition, dans laquelle l'agent de gonflement comprend de la saccharose.

6. Composition selon la revendication 4, dans laquelle au moins un agent de saveur est choisi dans le groupe constitué d'agents de saveur séchés par atomisation, d'agents de saveur agglomérés, d'agents de saveur agglomérés séchés par atomisation, d'agents de saveur en granules, d'agents de saveur extrudés, d'agents de saveur encapsulés, et leurs mélanges.

7. Composition selon l'une quelconque des revendications précédentes, comprenant de 0,01 % à 10 % de l'édulcorant de haute intensité total, en poids de la composition, dans laquelle au moins un édulcorant de haute intensité est choisi dans le groupe constitué de l'acésulfame K, l'aspartame et le sucralose.

8. Composition pratiquement sèche selon la revendication 1, comprenant:

a) de 0,001 % à 25 % d'aspartame, dans laquelle au moins 82 % de l'aspartame, en poids, comprend des particules ayant une dimension des particules supérieure à 106 microns; et
b) moins de 96 % d'un agent de gonflement, en poids de la composition;

dans laquelle la composition est appropriée pour une utilisation comme aliment ou boisson.